# EUROPÄISCHE PATENTSCHRIFT

(11) **EP 4 062 595 B1**
(45) Veröffentlichungstag und Bekanntmachung des Hinweises auf die Patenterteilung: **21.05.2025**
(21) Anmeldenummer: 20811318.3
(22) Anmeldetag: 20.11.2020
(51) Int. Cl.: H04L 12/403, H04J 3/06, H04L 12/46, H04L 47/2416, H04L 47/2491, H04L 47/28, H04L 12/40, G05B 19/418

(54) **VERFAHREN, SYSTEM UND GATEWAY ZUR VERNETZUNG ZEITSENSITIVER FELDBUSSE**
METHOD, SYSTEM, AND GATEWAY FOR LINKING TIME-SENSITIVE FIELDBUSES
PROCÉDÉ, SYSTÈME ET PASSERELLE POUR RELIER DES BUS DE TERRAIN SENSIBLES AU TEMPS

(30) Priorität: 20.11.2019 DE 102019217909
(43) Veröffentlichungstag der Anmeldung: 28.09.2022
(73) Patentinhaber: Wago Verwaltungsgesellschaft mbH, 32423 Minden (DE)
(72) Erfinder: SCHWAMBORN, Fabian, 32584 Löhne (DE)
(74) Vertreter: Bardehle Pagenberg Partnerschaft mbB Patentanwälte Rechtsanwälte
(86) Internationale Anmeldenummer: PCT/EP2020/082943
(87) Internationale Veröffentlichungsnummer: WO 2021/099592

(56) Entgegenhaltungen:
- DE-A1- 102012 204 586
- US-A1- 2016 080 533
- BRUNNER STEFAN ET AL: "Automotive E/E-architecture enhancements by usage of ethernet TSN", 2017 13TH WORKSHOP ON INTELLIGENT SOLUTIONS IN EMBEDDED SYSTEMS (WISES), IEEE, 12 June 2017 (2017-06-12), pages 9 - 13, XP033128710, DOI: 10.1109/WISES.2017.7986925
- HELGE ZINNER ET AL: "Application and realization of gateways between conventional automotive and IP/Ethernet-based networks", DESIGN AUTOMATION CONFERENCE (DAC), 2011 48TH ACM/EDAC/IEEE, IEEE, 5 June 2011 (2011-06-05), pages 1 - 6, XP031927647, ISBN: 978-1-4503-0636-2

## Beschreibung

### Gebiet der Erfindung

Die Erfindung betrifft zeitsensitive Feldbussystem, insbesondere industrielle Feldbussysteme zur Steuerung industrieller Systeme. Insbesondere betrifft die Erfindung ein Verfahren, ein System und ein Gateway zur Vernetzung mindestens zweier zeitsensitiver Feldbusse.

### Hintergrund der Erfindung

Feldbusse dienen dazu, verschiedene Teilnehmergeräte (z.B. Feldgeräte wie Sensoren, Aktoren, Messfühler, Stellglieder, usw. sowie Controller, wie z.B. Steuerungs- bzw. Automatisierungsgeräte, Speicher-Programmierbare-Steuerungen, SPS, usw.) in einer Anlage (z.B. industrielle Fertigungsanlage, Fahrzeug, Gebäude usw.) zum Zweck der Kommunikation untereinander zu verbinden. Die Kommunikation findet dabei insbesondere, jedoch nicht ausschließlich, zwischen verschiedenen Feldgeräten und einem Feldbus-Controller statt, der die in der Anlage ablaufenden Prozesse steuert und überwacht. Ein Teilnehmergerät kann ein Feldgerät oder ein Controller sein und weist insbesondere eine Schnittstelle mit dem Feldbus auf.

Die über einen Feldbus zu übertragenden Nachrichten (z.B. Datenblöcke, Datenströme) sind dabei wenigstens zum Teil zeitsensitiv, d.h. sie haben Echtzeit-Anforderungen in Bezug auf die Übertragungslatenzzeit. Beispielsweise ist es für derartige zeitsensitiven Daten erforderlich, dass eine von einem Teilnehmergerät abgesendete Nachricht innerhalb einer vorhersagbaren Zeitspanne zuverlässig vom Feldbus-Controller oder einem anderen an den Feldbus angeschlossenen Feldgerät empfangen wird.

Die zwischen Teilnehmergeräten des Feldbusses zu übertragenden Daten umfassen nicht nur Wertkommunikation, wie z.B. Messwerte, Stellwerte oder Anweisungen, sondern auch Ereigniskommunikation zur zeitlichen Koordination von Maschinen und Anlagenteilen. Beispielsweise erfolgt die Koordination und Synchronisation von Bewegungen von Maschinenteilen zunehmend nicht mehr über mechanische Vorrichtungen (z.B. Metallpressen mit mechanisch starr gekoppelten Einlege- und Auswurfvorrichtungen im Maschinentakt, Nockenwellen, Getrieben usw.), sondern über digitale Nachrichten, die mit Echtzeit-Anforderungen über Feldbusse übertragen werden.

Ein Feldbus ist einer Zeitdomäne zugeordnet, in welcher alle Teilnehmergeräte jeweils einen Zeitgeber (z.B. eine Uhr) aufweisen. Die Zeitgeber der Teilnehmergeräte sind innerhalb der Zeitdomäne untereinander synchronisiert und weisen somit ein gemeinsames Verständnis der Zeit auf. Damit können alle Teilnehmergeräte eines Feldbusses einem festgelegten Feldbus-Kommunikationszyklus folgen und sind aufeinander abgestimmt, um zum richtigen Zeitpunkt die entsprechenden Aktionen ausführen. Ein Teilnehmergerät des Feldbusses fungiert dabei als Master für die Zeitdomäne, wobei der Zeitgeber des Masters die Zeitreferenz für die anderen Teilnehmergeräte der Zeitdomäne liefert. Letztere Teilnehmergeräte, die innerhalb der Zeitdomäne ihre Zeit von dem Master ableiten, werden auch als Slave bezeichnet. Die Rolle des Zeit-Masters im Feldbus kann dabei von einem Feldbus-Controller, jedoch auch von einem anderen an den Feldbus angeschlossenen Teilnehmergerät übernommen werden. Der Zeit-Master des Feldbusses kann seine Zeitbasis mit einer anderen Zeitbasis synchronisieren, beispielsweise mit dem Zeit-Master eines anderen Feldbusses oder mit einer hierarchisch übergeordneten Zeitbasis. Indem die Master mehrerer Feldbusse ihre jeweilige Feldbus-Zeit miteinander synchronisieren, kann eine Zeitdomäne auch mehrere Feldbusse umfassen. Durch die Synchronisation der Zeitbasis werden zwar die "Uhren" angeglichen. Dies bedeutet jedoch nicht notwendigerweise, dass zwei Feldbusse innerhalb einer Zeitdomäne gleiche Kommunikationszyklen aufweisen.

Eine erste Generation von Feldbussen wurde entwickelt, um den Verkabelungsaufwand durch die früher übliche Parallelverdrahtung von Maschinenteilen mittels Kabelbäumen durch digitale Übertragungstechnik zu ersetzen. Hierfür wurden mehrere, teils proprietäre Feldbusprotokolle entwickelt. Spätere Generationen von Feldbussen basieren vor allem auf dem Ethernet-Standard IEEE 802.3, wobei die Ethernet-Protokolle modifiziert oder erweitert wurden, um zeitsensitive Netzwerke (engl. Time-Sensitive Networks, TSN) zu realisieren.

Standards für Echtzeit-Ethernet-Protokolle werden beispielsweise von der IEEE 802.1Q Taskgroup für TSN-Netzwerke entwickelt. Ein echtzeit-unterstützender Scheduler (time-aware scheduler) wird beispielsweise durch den IEEE802.1QBv-Standard definiert. Der Scheduler ermöglicht es, die Kommunikation in einem Netzwerk in feste, sich periodisch wiederholende Kommunikationszyklen einzuteilen und innerhalb der Zyklen feste Zeitschlitze zur Übertragung zeitkritischer Daten zu definieren, reservieren oder auszuhandeln. Hierdurch kann eine getaktete Ende-zu-Ende Übertragung zwischen zwei Teilnehmergeräten realisiert werden.

Außerhalb der für Echtzeit-Übertragung vorgesehenen Zeitschlitze können nicht-zeitsensitive Daten (Best-Effort-Daten) übertragen werden, wobei hierfür die bekannten Protokolle für eine paketvermittelte Übertragung (z.B. Ethernet-Protokoll) verwendet werden. Durch den echtzeit-unterstützenden Scheduler können Schutzbänder eingerichtet werden, um ein Überlappen von Übertragungen nicht-zeitsensitiver Datenpakete mit den für Echtzeitübertragung reservierten Zeitschlitzen zu vermeiden.

Das Dokument US 2016/080533 A1 offenbart ein Gateway, das zwischen zwei Netzwerken eines Fahrzeugs Daten übertragen kann. Hierbei ist das erste Netzwerk ein zeitsensitives FlexRay Netzwerk und das zweite Netzwerk ein Fahrzeug-Ethernet-Netzwerk.

Des Weiteren ist es in TSN-Netzwerken möglich, die Übertragung nicht-zeitsensitiver Datenpakete während der Echtzeit-Intervalle zu unterbrechen und danach fortzusetzen. Auf diese Weise wird in einem TSN-fähigen Netzwerk die Koexistenz zeitsensitiver und nicht-zeitsensitiver Kommunikation ermöglicht.

Im Zuge der zunehmenden Digitalisierung und Vernetzung von Anlagen (z.B. eines gesamten Produktionsstandorts) besteht die Notwendigkeit, Kommunikation zwischen Feldbussen sowie die Kommunikation zwischen einem Feldbus und Einrichtungen einer übergeordneten Steuerungsebene, Prozessleitebene, Betriebsleitebene und/oder Unternehmensebene oder zu ermöglichen. Die Vernetzung betrifft sowohl nicht-zeitsensitive Daten als auch zeitsensitive Daten.

Zwar basieren die meisten heute gebräuchlichen Feldbusse Echtzeit-Protokolle auf Ethernet, jedoch gibt es trotz dieser Gemeinsamkeit technische Unterschiede, so dass verschiedene Feldbus-Typen untereinander inkompatibel oder nicht vollständig kompatibel sind. Es kann auch vorkommen, dass verschiedene Generationen von Feldbussen verwendet werden, beispielsweise wenn Teile einer Anlage hinzugefügt, ausgetauscht oder modernisiert werden, wobei Feldbusse unterschiedlicher Generationen nicht notwendigerweise vollständig kompatibel sind. Gegenwärtig werden Anstrengungen unternommen, universell verwendbare Echtzeit-Protokolle zu spezifizieren, welche die vielen proprietären und untereinander nicht kompatiblen Protokolle für zeitsensitive Feldbusse ablösen sollen. Jedoch wird deren Verwendung den Austausch bzw. die Umrüstung bestehender Feldbussysteme bedingen, was häufig wirtschaftlich nicht vertretbar ist.

Bestehende Lösungen für die zeitsensitive Kommunikation zwischen zwei oder mehreren Feldbussen gehen davon aus, dass alle zu koppelnden Feldbusse sowohl ein einheitliches Zeitverständnis aufweisen, wobei jedoch auch alle Zeitversätze sowie Zeitdauern und/oder Startzeiten der Feldbus-Kommunikationszyklen synchronisiert sind. Feldbusse werden jedoch häufig zu Beginn einer Fertigung aufwendig konfiguriert, sodass die durch den Feldbus gesteuerten Maschinen und/oder Anlagenteile optimal aufeinander abgestimmt sind. Eine Angleichung der Zykluszeiten eines bestehenden Feldbusses an neu hinzukommende Anlagenteile mit weiteren Feldbussen würde jedoch eine Neukonfiguration der durch den Feldbus gesteuerten bestehenden Prozesse notwendig machen.

Es besteht daher ein Bedarf, zeitsensitive Feldbusse miteinander zu vernetzen, die nicht vollständig miteinander kompatibel sind.

### Zusammenfassung der Erfindung

Die Aufgabe wird insbesondere durch ein Verfahren zur Vernetzung eines ersten zeitsensitiven Feldbusses mit einem zweiten zeitsensitiven Feldbus gemäß Anspruch 1, durch ein System zur Vernetzung mindestens zweier zeitsensitive Feldbusse gemäß Anspruch 9 sowie durch ein Gateway zur Zeitsynchronisation und zur Vernetzung mindestens zweier zeitsensitive Feldbusse gemäß Anspruch 13 gelöst.

Zur Lösung der Aufgabe wird insbesondere ein Gateway verwendet, das die Kommunikation zwischen zeitsensitiven Feldbussen vermittelt. Da das Gateway die jeweilige Zeitdomäne aller daran angeschlossenen Feldbusse unterstützt, können die Feldbusse weitgehend ohne Angleichung der Zeit und insbesondere der Zeiten der Kommunikationszyklen miteinander kommunizieren. Das gilt sowohl für zeitsensitive Daten als auch für nicht-zeitsensitive Daten.

Ein Aspekt der vorliegenden Erfindung betrifft ein Verfahren zur Vernetzung eines ersten zeitsensitiven Feldbusses mit einem zweiten zeitsensitiven Feldbus. Der erste zeitsensitive Feldbus umfasst ein erstes Teilnehmergerät und weist eine eigene erste Zeitdomäne auf. Der zweite zeitsensitive Feldbus umfasst ein zweites Teilnehmergerät und weist eine eigene zweite Zeitdomäne auf. Der erste und der zweite Feldbus sind mittels eines Gateways zur Datenübertragung miteinander verbunden. Das Verfahren umfasst das Definieren der ersten Zeitdomäne im ersten Feldbus durch das erste Teilnehmergerät des ersten Feldbusses sowie das Definieren der zweiten Zeitdomäne im zweiten Feldbus durch das zweite Teilnehmergerät des zweiten Feldbusses, das Übertragen von zeitsensitiven Daten in definierten ersten Zeitschlitzen innerhalb des ersten Feldbusses und das Übertragen von zeitsensitiven Daten in definierten zweiten Zeitschlitzen innerhalb des zweiten Feldbusses. Weiterhin umfasst das Verfahren das Synchronisieren des Gateways als Slave bezüglich der ersten Zeitdomäne des ersten Feldbusses und zusätzlich bezüglich der zweiten Zeitdomäne des zweiten Feldbusses, wobei das Gateway mindestens zwei Zeitdomänen gleichzeitig unterstützt. Durch die Unterstützung beider Zeitdomänen ist das Gateway eingerichtet, Nachrichten bzw. Daten, wie z.B. Datenpakete zwischen den Feldbussen unter Einhaltung der auf den Feldbussen definierten Kommunikationszyklen und Zeitschlitzen für zeitsensitive Daten zu übertragen, ohne dass die jeweiligen Zeitdomänen der Feldbusse bezüglich der absoluten Zeit synchronisiert werden und die Zykluszeiten der Kommunikationszyklen angeglichen werden müssen.

In einer Ausführungsform umfasst das Verfahren weiterhin die Schritte des Übertragens von nicht-zeitsensitiven Daten zu einer Zeit außerhalb der ersten Zeitschlitze von dem ersten Feldbus zu dem Gateway, dem Zwischenspeichern der nicht-zeitsensitiven Daten im Gateway sowie dem Übertragen der vom ersten Feldbus erhaltenen, nicht-zeitsensitiven Daten vom Gateway auf den zweiten Feldbus zu einer Zeit außerhalb der zweiten Zeitschlitze. Auf diese Weise können nicht-zeitsensitive Daten unter Beachtung der auf den jeweiligen Feldbussen definierten ersten Zeitschlitzen des ersten Feldbusses und zweiten Zeitschlitzen des zweiten Feldbusses übertragen werden.

Es ist in der Praxis möglich, dass ein Zeitversatz zwischen der ersten und zweiten Zeitdomäne gegeben ist. Dieser Zeitversatz ergibt sich wegen der unterschiedlichen Definition der Zeit der ersten und zweiten Zeitdomäne sowie aus der Differenz zwischen den Startzeitpunkten der Kommunikationszyklen des ersten und des zweiten Feldbusses. Des Weiteren können die Zeitdomänen der Feldbusse unterschiedliche Frequenzen aufweisen. Insbesondere weisen die Uhren der Teilnehmergeräte spezifische Taktfrequenzen auf, die zwar innerhalb einer Zeitdomäne entsprechend frequenzsynchronisiert sind, jedoch gilt dies nicht zwischen den Zeitdomänen. Selbst wenn die Taktfrequenzen in den Zeitdomänen des ersten und des zweiten Feldbusses nominal gleich sind, so können die lokalen Oszillatoren für die Zeitgeber leichte Unterschiede aufweisen, die zu Frequenzunterschieden der Taktgeber führen. In der ersten und zweiten Zeitdomäne können weiterhin unterschiedliche Zeitdauern für die Kommunikationszyklen definiert sein, innerhalb welcher jeweils die ersten bzw. zweiten Zeitschlitze für die Übertragung der zeitsensitiven Daten periodisch wiederholt werden. Des Weiteren können zwischen dem ersten und zweiten Feldbus zeitliche Unterschiede, z.B. in Bezug auf die ersten und zweiten Zeitschlitze für die Übertragung zeitsensitiver Daten bestehen.

In einer Ausführungsform weist das Gateway einen ersten und einen zweiten Zeitgeber auf, und das Verfahren weist weiterhin die Schritte des Synchronisierens des ersten Zeitgebers als Slave mit der ersten Zeitdomäne des ersten Feldbusses und des Synchronisierens des zweiten Zeitgebers als Slave mit der zweiten Zeitdomäne des zweiten Feldbusses. Hierdurch "kennt" das Gateway jeweils die in der ersten und zweiten Zeitdomäne definierte Zeit und kann beispielsweise die Übertragung nicht-zeitsensitiver Daten derart koordinieren, dass die Zeitschlitze zur Übertragung zeitsensitiver Daten nicht berührt werden.

In einer Ausführungsform wird zunächst ausschließlich die Frequenz des ersten Zeitgebers des Gateways auf die Frequenz der zweiten Zeitdomäne des zweiten Zeitgebers des Gateways gesetzt, und der erste Zeitgeber des Gateways wird als Master für den ersten Feldbus gesetzt, um die Frequenz des ersten Feldbusses auf die Frequenz der zweiten Zeitdomäne zu setzen. Auf diese Weise kann eine Synchronisation der Taktfrequenzen in den Zeitdomänen des ersten und zweiten Feldbusses erfolgen. Basierend auf einer derartigen minimalen Synchronisation können der erste und zweite Feldbus bzw. die erste und zweite Zeitdomäne zwar unterschiedlich definierte Zeiten aufweisen, jedoch ist der Zeitversatz zeitinvariant, d.h. zeitlich konstant. Insbesondere wird durch lediglich eine Synchronisation der Taktfrequenz der Zeitgeber im ersten und zweiten Feldbus ein harter Zeitsprung im ersten Feldbus vermieden, der bei Angleichung der ersten und zweiten Feldbuszeit eintreten könnte. Die Angleichung der Frequenzen kann dabei über einen Zeitraum erfolgen, der den Betrieb der im ersten Feldbus gesteuerten Prozesse nicht beeinträchtigt.

In einer Ausführungsform bestimmt das Gateway nach erfolgter Frequenzsynchronisation die Zykluszeitdauer der ersten Zeitdomäne und die Zykluszeitdauer der zweiten Zeitdomäne zu einem bestimmten Referenzzeitpunkt. Letzterer Referenzzeitpunkt lässt sich in Bezug auf die in der ersten und/oder zweiten Zeitdomäne gültigen Zeit bestimmen.

Des Weiteren kann das Gateway einen Zeitversatz zwischen der ersten Zeitdomäne und der zweiten Zeitdomäne zu dem Referenzzeitpunkt bestimmen. Der Zeitversatz beinhaltet die Unterschiede der Definition der Zeit in der ersten und zweiten Zeitdomäne sowie die Differenz zwischen den Startzeitpunkten der Kommunikationszyklen des ersten und des zweiten Feldbusses. Das Gateway kann zusätzlich die Zykluszeitdauer der ersten Zeitdomäne an den zweiten Feldbus kommunizieren und die Zykluszeitdauer der zweiten Zeitdomäne an den ersten Feldbus kommunizieren. Auf diese Weise ist beispielsweise das erste Teilnehmergerät in der ersten Zeitdomäne bzw. das zweite Teilnehmergerät in der zweiten Zeitdomäne in der Lage, die Zykluszeitdauer und den Zeitversatz im jeweils anderen Feldbus in Bezug auf den Referenzzeitpunkt zu bestimmen und fortzuführen.

In einer Ausführungsform definiert das erste Teilnehmergerät einen ersten Zeitschlitz im ersten Feldbus zur Kommunikation zeitkritischer Daten, und das zweite Teilnehmergerät einen zweiten Zeitschlitz im zweiten Feldbus zur Kommunikation zeitkritischer Daten, wobei das Definieren derart erfolgt, dass sich die Zeitschlitze des ersten Feldbusses und des zweiten Feldbusses zeitlich überlappen. Hierbei können die ersten und zweiten Zeitschlitze identisch sein (d.h. vollständig überlappen), oder sie haben zumindest eine zeitliche Schnittmenge, um eine zeitkritische Kommunikation zwischen dem ersten Feldbus und dem zweiten Feldbus einrichten zu können.

In einer Ausführungsform werden zeitkritische Daten durch das Gateway vom zweiten Feldbus auf den ersten Feldbus und/oder umgekehrt während der zeitlich überlappenden ersten und zweiten Zeitschlitze durchgeleitet. Damit wird eine getaktete Ende-zu-Ende Übertragung zwischen zwei Teilnehmergeräten über Feldbusgrenzen hinweg realisiert.

Ein weiterer Aspekt der Erfindung betrifft ein System zur Vernetzung mindestens zweier zeitsensitiver Feldbusse, aufweisend einen ersten zeitsensitiven Feldbus, welcher ein erstes Teilnehmergerät und eine eigene erste Zeitdomäne aufweist, wobei die erste Zeitdomäne erste Zeitschlitze zur Übertragung zeitsensitiver Daten beinhaltet. Das System umfasst weiterhin einen zweiten zeitsensitiven Feldbus, welcher ein zweites Teilnehmergerät und eine eigene zweite Zeitdomäne aufweist, wobei die zweite Zeitdomäne zweite Zeitschlitze zur Übertragung zeitsensitiver Daten beinhaltet. Das System weist des Weiteren mindestens ein Gateway auf, das den ersten und zweiten Feldbus zur Datenübertragung miteinander verbindet wobei das Gateway einen ersten Zeitgeber aufweist, der eingerichtet ist, sich als Slave bezüglich der ersten Zeitdomäne des ersten Feldbusses zu synchronisieren und das Gateway einen zweiten Zeitgeber aufweist, der eingerichtet ist, sich als Slave bezüglich der zweiten Zeitdomäne des zweiten Feldbusses zu synchronisieren. Durch die Unterstützung beider Zeitdomänen ist das Gateway eingerichtet, Nachrichten bzw. Daten, wie z.B. Datenpakete zwischen den Feldbussen unter Einhaltung der auf den Feldbussen definierten Kommunikationszyklen und Zeitschlitzen für zeitsensitive Daten zu übertragen, ohne dass die jeweiligen Zeitdomänen der Feldbusse bezüglich der absoluten Zeit synchronisiert werden und die Zykluszeiten der Kommunikationszyklen angeglichen werden müssen.

In einer Ausführungsform kann das Gateway einen Zwischenspeicher aufweisen, zum Zwischenspeichern von zu einer Zeit außerhalb der ersten Zeitschlitze von dem ersten Feldbus übertragenen und von dem Gateway erhaltenen nicht-zeitsensitiven Daten des ersten Feldbusses, und zum Übertragen der zwischengespeicherten Daten vom Gateway auf den zweiten Feldbus außerhalb der zweiten Zeitschlitze. Damit kann die Übertragung von nicht-zeitsensitiven Daten zu Zeiten erfolgen in denen in beiden Feldbussen keine zeitsensitiven Daten übertragen werden.

Das Gateway kann weiterhin dazu eingerichtet sein, Informationen über die ersten und zweiten Zeitschlitze des ersten und des zweiten Feldbusses zu empfangen und beim Senden der nicht-zeitkritischen Daten zu berücksichtigen. Auf diese Weise wird verhindert, dass die nicht-zeitkritischen Daten nicht während eines für zeitkritische Übertragung reservierten Zeitschlitzes des zweiten Feldbusses gesendet werden.

Das Teilnehmergerät des ersten Feldbusses kann dabei dazu eingerichtet sein, die ersten Zeitschlitze so zu definieren, und das Teilnehmergerät des zweiten Zeitschlitzes kann dazu eingerichtet sein, zweiten Zeitschlitze so zu definieren, derart, dass sich die ersten und zweiten Zeitschlitze zeitlich überlappen. Das Gateway kann dabei weiterhin zum Durchleiten von zeitkritischen Daten vom zweiten Feldbus auf den ersten Feldbus oder umgekehrt eingerichtet sein, während der überlappenden ersten und zweiten Zeitschlitze des ersten und zweiten Feldbusses.

Ein weiterer Aspekt betrifft ein Gateway zur Vernetzung mindestens zweier zeitsensitiver Feldbusse mit unterschiedlichen Zeitdomänen. Das Gateway weist einen ersten Zeitgeber auf, der eingerichtet ist, sich als Slave bezüglich der ersten Zeitdomäne des ersten Feldbusses zu synchronisieren sowie einen zweiten Zeitgeber, der eingerichtet ist, sich als Slave bezüglich der zweiten Zeitdomäne des zweiten Feldbusses zu synchronisieren. Durch die Unterstützung beider Zeitdomänen ist das Gateway eingerichtet, Nachrichten bzw. Daten, wie z.B. Datenpakete zwischen den Feldbussen unter Einhaltung der auf den Feldbussen definierten Kommunikationszyklen und Zeitschlitzen für zeitsensitive Daten zu übertragen, ohne dass die jeweiligen Zeitdomänen der Feldbusse bezüglich der absoluten Zeit synchronisiert werden und die Zykluszeiten der Kommunikationszyklen angeglichen werden müssen.

In einer Ausführungsform ist das Gateway zur Datenübertragung nicht-zeitkritischer Daten zwischen dem ersten Feldbus und dem zweiten Feldbus zu Zeitpunkten oder Zeitspannen außerhalb von Zeitschlitzen für zeitkritische Daten des ersten Feldbusses beziehungsweise zweiten Feldbusses eingerichtet, wobei das Gateway einen Zwischenspeicher aufweist, zum Zwischenspeichern von erhaltenen nicht-zeitkritischen Daten eines Feldbusses, vor dem Senden an den anderen Feldbus.

Das Gateway kann weiterhin dazu eingerichtet sein, Informationen über Zeitschlitze des ersten Feldbusses und Informationen über Zeitschlitze des zweiten Feldbusses zu empfangen und beim Senden von Daten zu berücksichtigen.

Des Weiteren kann das Gateway dazu eingerichtet sein, während sich überlappender Zeitschlitze zeitkritische Daten vom ersten Feldbus auf den zweiten Feldbus oder umgekehrt durchzuleiten.

In einer Ausführungsform ist das Gateway dazu eingerichtet, beim Durchleiten von zeitkritischen Daten die Informationen über den Zeitschlitz des ersten Feldbusses und die Informationen über den Zeitschlitz des zweiten Feldbusses zu berücksichtigen.

Weitere Ausführungsformen der Erfindung ergeben sich aus den Unteransprüchen.

### Kurze Beschreibung der Zeichnungen

In der folgenden detaillierten Beschreibung werden Aspekte der Erfindung unter Bezugnahme auf die Zeichnungen beschrieben, wobei
- Fig. 1: ein Blockschaltbild eines Systems mit einem ersten zeitsensitiven Feldbus und mit einem zweiten zeitsensitiven Feldbus darstellt;
- Fig. 2: schematisch ein Zeitdiagramm eines ersten und zweiten Feldbusses sowie die Übertragung nicht-zeitsensitiver Daten durch das Gateway darstellt;
- Fig. 3: schematisch ein detailliertes Zeitdiagramm der für einen ersten und zweiten Feldbus definierten Zykluszeiten darstellt; und
- Fig. 4: schematisch ein Zeitdiagramm eines ersten und zweiten Feldbusses sowie die Übertragung zeitsensitiver Daten durch das Gateway darstellt.

### Detaillierte Beschreibung

Die folgende detaillierte Beschreibung erläutert Ausführungsbeispiele der Erfindung anhand der oben genannten Figuren. Hierbei beschreiben gleiche Referenzzeichen in verschiedenen Figuren jeweils die gleiche Vorrichtung, den gleichen Verfahrensschritt bzw. die gleiche Zeiteinheit, usw.

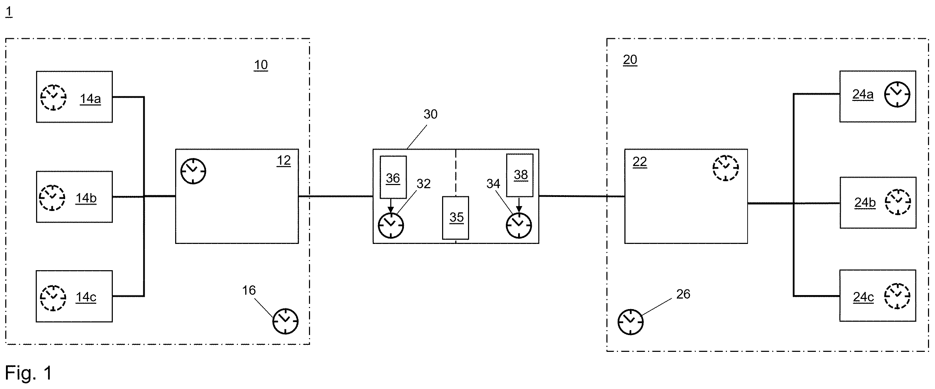

Fig. 1 zeigt ein Blockschaltbild eines exemplarischen Systems 1 mit einem ersten zeitsensitiven Feldbus 10 und einem zweiten zeitsensitiven Feldbus 20. Der erste Feldbus 10 und der zweite Feldbus 20 umfassen exemplarisch die Teilnehmergeräte 12, 14a-c, bzw. 22, 24a-c, wobei die Teilnehmergeräte 12, 22 jeweils Controller des Feldbusses, beispielsweise ein Automatisierungsgerät, eine Speicher-programmierbare-Steuerung, SPS, ein Knoten oder eine andere industrielle Steuerung sind und die Teilnehmergeräte 14a-c, bzw. 24a-c Feldgeräte, beispielsweise E/A-Bausteine für Sensoren und/oder Aktoren sind, die Größen eines durch den Feldbus automatisierten Prozesses messen bzw. beeinflussen können. Die Teilnehmergeräte 12, 14a-c, bzw, 22, 24a-c sind im jeweiligen Feldbus 10, 20 kommunikativ untereinander über eine Schnittstelle miteinander verbunden, wobei die Definition der Schnittstelle ein Schnittstellenprotokoll umfasst.

Die Teilnehmergeräte 12, 14a-c des ersten Feldbusses 10 gehören einer ersten Zeitdomäne 16 an, wobei alle Teilnehmergeräte 12, 14a-c dasselbe Verständnis einer absoluten Zeit aufweisen. Hierzu weist jedes Teilnehmergerät 12, 14a-c jeweils einen Zeitgeber auf, der in Fig. 1 schematisch durch das Ziffernblatt einer Uhr symbolisiert ist. In entsprechender Weise gehören die Teilnehmergeräte 22, 24a-c des zweiten Feldbusses 20 einer zweiten Zeitdomäne 26 an. In den Feldbussen 10 und 20 sind die Feldbusleitungen ausgehend vom Controller 12, 22 sternförmig mit den Feldgeräten verbunden. Allgemein können Feldbusse auch durch andere Topologien, z.B. Baumtopologie, Bustopologie, Ringtopologie gebildet werden. Es ist auch möglich, dass die Teilnehmergeräte 12, 24a-c, bzw. 22, 24a-c eines Feldbusses 10, 20 wenigstens teilweise durch ein drahtloses Netzwerk miteinander verbunden sind.

Jeweils ein Teilnehmergerät 12, 24a-c, bzw. 22, 24a-c gibt für den jeweiligen Feldbus 10 bzw. 20 die Zeit vor und wird daher als Master bezeichnet. Beim ersten Feldbus 10 ist beispielsweise der Controller 12 der Master, was in Fig. 1 als Ziffernblatt mit durchgezogenen Linien dargestellt ist. Beim zweiten Feldbus 20 ist beispielsweise das Teilnehmergerät 24a der Feldbus-Master. Die Uhr eines Masters 12 bzw. 24a gibt dabei jeweils die Zeit im Feldbus vor, wobei sich die übrigen Teilnehmergeräte eines Feldbusses, d.h. Teilnehmergeräte 14a-c im ersten Feldbus bzw. Teilnehmergeräte 22, 24b-c ihre Zeit jeweils von dem Master ableiten. Dies geschieht beispielsweise, indem sich die Teilnehmer innerhalb eines Feldbusses Nachrichten in regelmäßigen oder unregelmäßigen Abständen nach dem Precision Time Protocol nach dem Standard IEEE 1588 austauschen, und so auf diese Weise ein gemeinsames Verständnis der Zeit erlangen und aufrechterhalten.

Innerhalb des ersten Feldbusses 10 und des zweiten Feldbusses 20 können jeweils nicht-zeitsensitive als auch zeitsensitive Daten übertragen werden, wie im Folgenden noch genauer beschrieben werden wird. Beispielsweise kann die Datenübertragung in beiden Feldbussen gemäß den IEEE 802.1Q-Standards in Übertragungszyklen eingeteilt werden, wobei im ersten Feldbus 10 erste Zeitschlitze und im zweiten Feldbus 20 zweite Zeitschlitze definiert werden, in denen eine getaktete Ende-zu-Ende Übertragung zwischen zwei Teilnehmergeräten jeweils desselben Feldbusses möglich ist.

Das System 1 umfasst weiterhin ein Gateway 30, über welches beide Feldbusse 10, 20 miteinander kommunikativ verbunden sind. Zwar zeigt Fig. 1, dass die Feldbusse 10, 20 über ihre Controller 12 und 22 miteinander verbunden sind, dies ist jedoch nicht zwingend. Vielmehr hat das Gateway 30 eine Schnittstelle zu jedem der Feldbusse 10 und 20, so dass es in Bezug auf den jeweiligen Feldbus 10, 20 ein Teilnehmergerät darstellt. Das Gateway 30 unterstützt hierbei mindestens zwei Zeitdomänen 32 und 34. Weitere Zeitdomänen können gemäß der Anzahl anzukoppelnder Feldbusse unterstützt werden. Insbesondere umfasst das Gateway Zeitgeber 36 und 38, die für die erste 16 bzw. für die zweite Zeitdomäne 26 konfiguriert werden können.

Das Gateway 30 kann den ersten Feldbus 10 und den zweiten Feldbus 20 zur Datenübertragung miteinander verbinden. Hierzu unterhält das Gateway 30 einen Speicher 35 zum Puffern bzw. zum Zwischenspeichern von Daten. Beispielsweise können im Speicher 35 nicht-zeitsensitive Daten abgelegt werden. Das Gateway 30 kann aber auch eine getaktete Ende-zu-Ende Übertragung zwischen dem ersten und zweiten Feldbus 10, 20 während definierter Zeitschlitze ohne Verzögerung durchleiten.

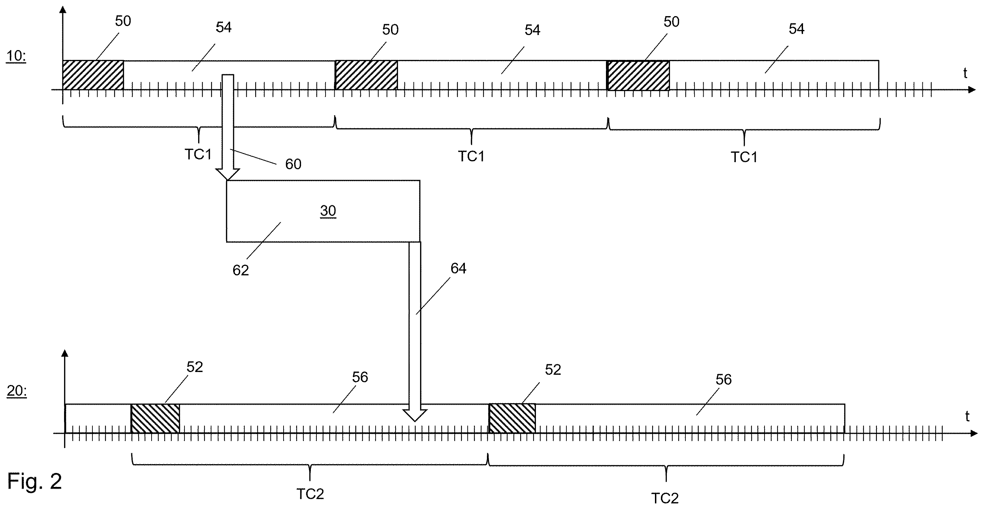

Fig. 2 zeigt ein exemplarisches Zeitdiagramm des ersten Feldbusses 10 und des zweiten Feldbusses 20. Hierbei weist der erste Feldbus 10 Kommunikations- bzw. Übertragungszyklen mit periodisch wiederkehrenden Zyklusintervallen TC1 auf, die nach Lage und Dauer gemäß dem in Fig. 2 oberen Zeitstrahl definiert sind. Entsprechend weist der zweite Feldbus 20 Kommunikationszyklen mit periodisch wiederkehrenden Zyklusintervallen TC2 auf, die nach Lage und Dauer gemäß dem in Fig. 2 unteren Zeitstrahl definiert sind.

In den Feldbussen 10, 20 können erste Zeitschlitze 50 bzw. zweite Zeitschlitze 52 zur Übertragung zeitsensitiver Daten innerhalb des jeweiligen Feldbusses 10, 20 definiert, verhandelt oder ermittelt werden. Hierzu kann beispielsweise der im Standard IEEE 802.1QBv definierte Echtzeit-unterstützende Scheduler (time-aware scheduler) verwendet werden. Lediglich exemplarisch fallen die ersten Zeitschlitze 50 und die zweiten Zeitschlitze 52 mit dem Anfang der entsprechenden Kommunikationszyklen zusammen. Allgemein können die Zeitschlitze 50, 52 zur zeitsensitiven Übertragung an jeglicher Position innerhalb eines Übertragungszyklus liegen. Es ist auch möglich, pro Übertragungszyklus mehrere getrennte Zeitschlitze 50, 52 für eine zeitsensitive Kommunikation zu definieren.

Fig. 2 zeigt weiterhin Zeitspannen 54 und 56, die zu den jeweiligen Übertragungszyklen gehören, die außerhalb der zur Übertragung zeitsensitiver Daten reservierten Zeitschlitze 50 bzw. 52 liegen. In diesen Intervallen 54, 56 können zwischen den Feldbussen 10, 20 nicht-zeitsensitive Daten beispielsweise nach dem Ethernet-Protokoll übertragen werden, für die das CSMA/CD (Carrier Sense Multiple Access with Collision Detection) Zugriffsverfahren gilt.

In einem Ausführungsbeispiel werden zunächst die Zeitgeber 36 und 38 des Gateways 30 als Slave in Bezug auf die Zeitdomänen 16, 26 der Feldbusse 10 und 20 synchronisiert. Da das Gateway 30 eine Schnittstelle als Teilnehmergerät sowohl zum ersten 10 als auch zum zweiten Feldbus 20 aufweist, sind seitens des Gateways 30 auch die entsprechenden Zykluszeitdauern TC1 und TC2, die zeitliche Lage der Kommunikationszyklen sowie die Zeitschlitze 50 und 52 bekannt, in denen in den jeweiligen Feldbussen 10, 20 zeitsensitive Kommunikation abgewickelt wird.

Entsprechend sind auch diejenigen Intervalle 54 und 56 bekannt, denen nicht-zeitsensitive Daten übertragen werden.

Eine Übertragung nicht-zeitsensitiver Daten zwischen dem ersten Feldbus 10 und dem zweiten Feldbus 20 kann dadurch erfolgen, dass vom ersten Feldbusse 10 nicht-zeitsensitive Daten 60 während eines ersten nicht-zeitsensitiven Intervalls 54 an das Gateway 30 übertragen werden, wie durch den Pfeil 60 symbolisiert. Diese Daten 60 können in dem Zwischenspeicher 35 des Gateways 30 zwischengespeichert werden, wie durch den Schritt 62 symbolisiert. Schließlich können die zwischengespeicherten Daten vom Gateway 30 auf den zweiten Feldbusse 20 während Intervallen 56 außerhalb der zweiten Zeitschlitze 52 übertragen werden, wie durch den Pfeil 64 symbolisiert. Beispielsweise muss das Gateway 30 zum Aussenden der Daten 64 auf den zweiten Feldbus mittels des CSMA/CD -Verfahrens oder einem anderen Bewerbungsverfahren (engl. contention) sicherstellen, dass der zweite Feldbus 20 während der Zeitschlitze 56 zur Übertragung frei ist.

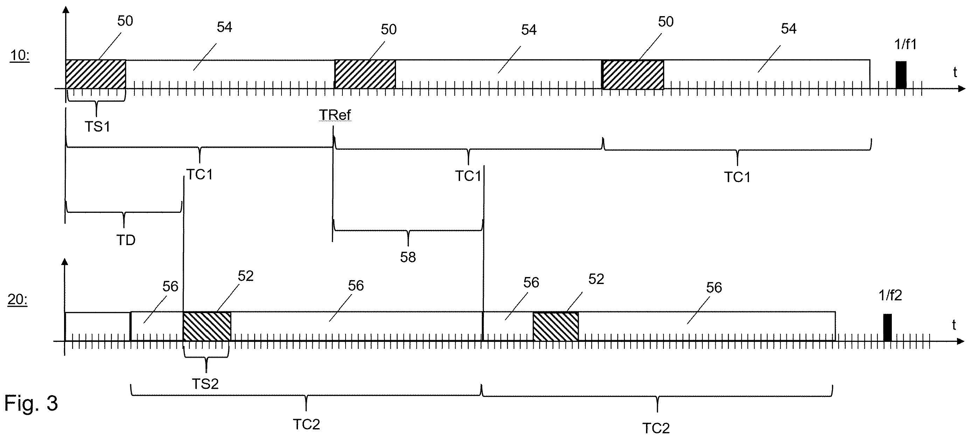

Fig. 3 zeigt schematisch ein detailliertes Zeitdiagramm der für den ersten und zweiten Feldbus 10, 20 definierten Zykluszeiten gemäß einiger Aspekte der Erfindung. In einem Beispiel können die Taktgeber in den Teilnehmergeräten der Feldbusse 10 und 20 unterschiedliche Taktfrequenzen f1 bzw. f2 aufweisen. In Fig. 3 ist der Kehrwert der Taktfrequenzen 1/f1 bzw. 1/f2, nämlich die Taktzyklus-Dauer jeweils durch einen schwarzen Balken veranschaulicht. Selbst wenn beide Taktfrequenzen f1 und f2 nominell (d.h. gemäß einer Spezifikation) die gleichen Frequenzen aufweisen, so laufen die Uhren der Zeitdomänen 16 bzw. 26 der beiden Feldbusse unterschiedlich schnell, wenn die tatsächlichen Werte der Taktfrequenzen f1 und f2 sich geringfügig unterscheiden.

Des Weiteren kann zwischen den Anfangszeitpunkten der Kommunikationszyklen ein Zeitversatz 58 auftreten. Ein derartiger Zeitversatz 58 ergibt sich einmal wegen der unterschiedlichen Definition der Zeit in beiden Feldbussen 10, 20, zum anderen auch aus der Differenz zwischen den Startzeitpunkten der Kommunikationszyklen des ersten 10 und zweiten Feldbusses 20, selbst wenn beide Feldbusse das gleiche Verständnis der Zeit aufweisen würden. Weiterhin können die Kommunikationszyklen unterschiedliche Dauern TC1 und TC2 aufweisen. Daher kann allgemeinhin der Zeitversatz 58 nur in Bezug auf einen (absoluten) Referenzzeitpunkt TRef definiert werden. Der absolute Referenzzeitpunkt TRef kann dabei sowohl in der Zeit des ersten Feldbusses 10 als auch in der Zeit des zweiten Feldbusses 20 entsprechend ausgedrückt werden. Stehen die Zeitdauern TC1 und TC2 in einem rationalen Verhältnis zueinander, so kehrt ein bestimmter Zeitversatz 58 nach einer vorhersagbaren Anzahl von Zyklen des ersten bzw. des zweiten Feldbusses wieder. Beträgt beispielsweise die Zykluszeitdauer TC1 im ersten Feldbus 50 ms und die Zykluszeitdauer TC2 im zweiten Feldbus 25 ms, so kann der Zeitversatz 58 beispielsweise nach einem ersten Zyklus im zweiten Feldbus Null betragen, nach einem zweiten Zyklus im zweiten Feldbus 25 ms gegenüber dem ersten Feldbus, und dann wieder Null usw. Ist der Zeitversatz 58 jedoch zu einem Zeitpunkt TRef bekannt, so ist es möglich, für alle Kommunikationszyklen des ersten und zweiten Feldbusses den Zeitversatz 58 im Voraus zu bestimmen, selbst wenn die zykluszeitdauern TC1 und TC2 nicht in einem rationalen Verhältnis zueinander stehen.

Auf den Feldbussen 10 und 20 können des Weiteren unterschiedliche Dauern TS1 und TS2 der ersten und zweiten Zeitschlitze 50 bzw. 52 für die zeitsensitive Kommunikation auftreten, da diese für beide Feldbusse 10 und 20 unabhängig voneinander vereinbart werden können. Des Weiteren können die ersten und zweiten Zeitschlitze 50 bzw. 52 zeitliche Unterschiede TD in den Startzeiten aufweisen. Diese lassen sich im Allgemeinen wiederum nur in Bezug auf einen absoluten Referenzzeitpunkt TRef vorhersagbar bestimmen, da Startzeiten der Zeitschlitze 50 und 52 für die zeitsensitive Kommunikation mit den Zykluszeiten in den einzelnen Feldbussen variieren können.

Gemäß einer Ausführung ist, wie oben beschrieben, der erste Zeitgeber 36 des Gateways 30 als Slave des ersten Feldbusses 10 und der zweite Zeitgeber 38 des Gateways 30 als Slave des zweiten Feldbusses 20 eingerichtet. Zur Vereinfachung der Kommunikation zwischen dem ersten und dem zweiten Feldbus 10, 20 kann es nunmehr nützlich sein, lediglich die Frequenzen f1 und f2 der ersten Zeitdomäne 16 und der zweiten Zeitdomäne 26 zu synchronisieren. Durch eine derartige Synchronisation der Zeitgeber-Taktfrequenzen bleibt der Zeitversatz zwischen den Zeiten beider Zeitdomänen 16, 26 stabil, wodurch das Bestimmen von Zeitpunkten im Gateway 30 bzw. in den Teilnehmergeräten 12, 14a-c bzw. 22, 24a-c des ersten und zweiten Feldbusses in Bezug auf die jeweils andere Zeitdomäne 16, 26 vereinfacht wird. In einer Ausführungsform haben die Taktgeber beider Zeitdomänen 16, 26 die gleiche nominale Frequenz. Eine Frequenzsynchronisation kann nun dadurch erfolgen, dass der erste Zeitgeber 36 des Gateways 30 als Master für den ersten Feldbus 10 bestimmt wird, so dass das Gateway 30 über die Zeitsetzung im ersten Feldbus bestimmen kann. Weiterhin kann eine Synchronisation der Frequenz f1 des ersten Zeitgebers 36 des Gateways 30 auf die Frequenz f2 der zweiten Zeitdomäne 26 erfolgen. Eine Synchronisation ausschließlich der Frequenzen f1 und f2 in den Zeitdomänen 16, 26 kann sinnvoll sein, um Zeitsprünge der Teilnehmergeräte im ersten Feldbus 10 zu vermeiden. Die Synchronisation der Frequenzen kann dabei im laufenden Betrieb des ersten Feldbusses 10 über eine Anpasszeitdauer erfolgen, die lang genug gewählt wird, so dass die Prozesse des ersten Feldbusses 10 störungsfrei ablaufen können.

Nach erfolgter Frequenzsynchronisation kann das Gateway 30 die Zykluszeitdauern TC1 und TC2 der ersten und zweiten Zeitdomäne 16, 26 zu einem Referenzzeitpunkt TRef bestimmen. Des Weiteren kann das Gateway 30 den Zeitversatz 58 zwischen der ersten und zweiten Zeitdomäne 16, 26 zu dem Referenzzeitpunkt TRef bestimmen. Das Gateway 30 kann weiterhin die Zykluszeitdauer TC1 der ersten Zeitdomäne 16 an den zweiten Feldbus 20 kommunizieren sowie die Zykluszeitdauer TC2 der zweiten Zeitdomäne 26 an den ersten Feldbus 10 kommunizieren. Dies kann in Bezug auf den Referenzzeitpunkt TRef erfolgen. Auf diese Weise können bestimmte Teilnehmergeräte des ersten bzw. des zweiten Feldbusses 10, 20 die Kommunikationszyklen des jeweils anderen Feldbusses 20, 10 vorhersagbar bestimmen.

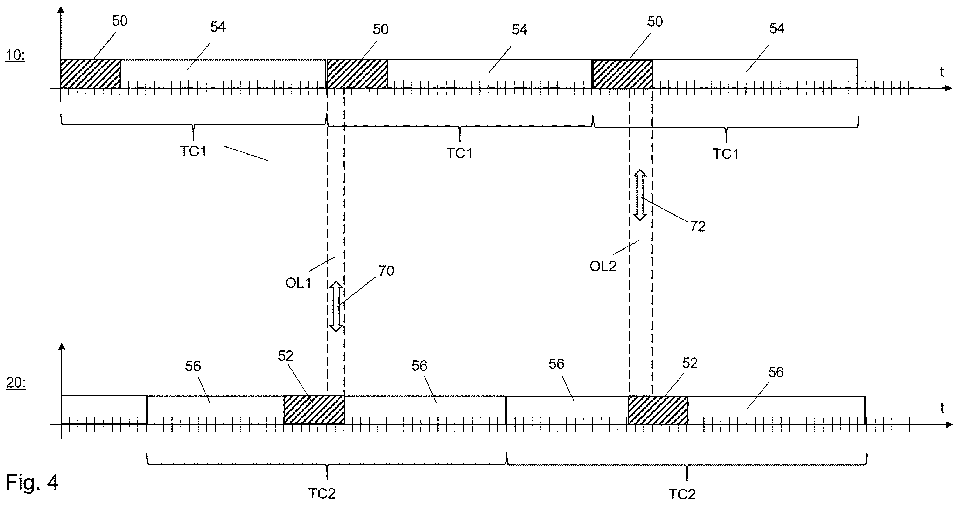

Fig. 4 zeigt schematisch ein Zeitdiagramm eines ersten 10 und eines zweiten Feldbusses 20 bei einer Übertragung zeitsensitiver Daten. Da die Zykluszeitdauern TC1 und TC2 der ersten und zweiten Zeitdomäne 16, 26 zu einem Referenzzeitpunkt TRef in beiden Feldbussen bekannt sind, kann beispielsweise das Teilnehmergerät 14c des ersten Feldbusses 10 an das Teilnehmergerät 24b des zweiten Feldbusses 20 zeitsensitive Daten übertragen. Dies kann dadurch erfolgen, dass die Teilnehmergeräte 14c und 24b im jeweiligen Feldbus 10, 20 Zeitschlitze 50, 52 zur Kommunikation zeitkritischer Daten definieren, die sich zumindest teilweise überlappen. Beispielsweise können die Teilnehmergeräte 14c und 24b, sofern sie dazu eingerichtet sind (z.B. als Scheduler gemäß dem IEEE802.1QBv-Standard), im Rahmen von Verhandlungen mögliche Zeitintervalle für eine zeitsensitve Kommunikation austauschen. Beispielsweise könnte das Teilnehmergerät 14c eine Anfrage an das Teilnehmergerät 24b senden, um mögliche Zeitintervalle abzufragen, und dann ein gemeinsames Zeitintervall bestimmen. Es ist auch möglich, dass das Teilnehmergerät 14c und/oder Teilnehmergerät 24b stellvertretend durch ein anderes dafür eingerichtetes Teilnehmergerät des ersten bzw. des zweiten Feldbusses 10, 20 die Bestimmung der ersten bzw. zweiten Zeitschlitze 50, 52 zur Kommunikation zeitkritischer Daten durchführen lässt.

Im vorliegenden Beispiel gemäß Fig. 4 haben entsprechende Teilnehmergeräte des ersten und zweiten Feldbusses gemeinsame Überlappungsbereiche OL1 und OL2 in den Zeitschlitzen 50 bzw. 52 vereinbart und diese Informationen über das Gateway 30 ausgetauscht, so dass diese auch dem Gateway 30 bekannt sind. Es ist auch möglich, dass die entsprechenden Zeitschlitze 50 bzw. 52 für die zeitsensitive Kommunikation zu in den jeweiligen Zyklen relativ zum Zyklusintervall des jeweiligen ersten bzw. zweiten Feldbusses relativ verschoben werden, damit in jedem Zyklus einen Überlappungsbereich OL1 bzw. OL2 geschaffen werden kann.

In einer Ausführungsform ist es nicht notwendig, in jedem Zyklus TC1 bzw. TC2 des ersten bzw. des zweiten Feldbusses 10, 20 einen Überlappungsbereich OL1, OL2 für die zeitsensitive Kommunikation zu schaffen. Beispielsweise kann es genügen, während jedes zweiten, dritten, usw. Zyklus des ersten bzw. des zweiten Feldbusses 10, 20 einen Überlappungsbereich zu definieren.

Sind während der Kommunikationszyklen des ersten und zweiten Feldbusses 10, 20 die ersten und zweiten Zeitschlitze 50 bzw. 52 bekannt, die für eine zeitsensitive Kommunikation innerhalb der Feldbusse reserviert sind, so können die Überlappungsbereiche OL1 und OL2 für eine zeitsensitive Kommunikation zwischen den Feldbussen regelbasiert bestimmt bzw. berechnet werden. Dann genügt es, zu einem Referenzzeitpunkt TRef einen einziges Paar überlappender Zeitschlitze 50 und 52 zu bestimmen.

Stehen die Zykluszeitdauern TC1 und TC2 in einem rationalen Verhältnis zueinander, so ergeben sich regelmäßig wiederkehrende Überlappungsbereiche OL1 und OL2. In diesem Fall erleichtert sich das Aushandeln und/oder Bestimmen der Zeitschlitze 50 und 52, so dass in diesen Fällen ein Überlappungsbereich OL1, OL2 regelmäßig wiederkehrt und daher nicht einzeln ausgehandelt oder bestimmt werden muss.

In einem Ausführungsbeispiel ist das Gateway 30 weiterhin dazu eingerichtet, während der zeitlich überlappenden Zeitschlitze, z.B. OL1 bzw. OL2 zeitkritische Daten 70, 72 zu übertragen. In einer Ausführungsform erfolgt dies dadurch, dass das Gateway 30 die zwischen dem ersten und dem zweiten Feldbus 10, 20 ermittelten Zeitschlitze für zeitsensitiver Übertragung 50 und 52 und insbesondere die jeweiligen Überlappungsintervalle OL1, OL2 ermittelt und die Signale zwischen dem ersten und zweiten Feldbus während dieser Intervalle durchleitet.

Durch das beschriebene Verfahren, System 1 und den Gateway 30 ist es möglich, zeitsensitive Feldbusse 10, 20 miteinander zu vernetzen, ohne dass eine Angleichung der Feldbuszeiten sowie der Kommunikationszyklen der Feldbusse vorgenommen werden muss. Dadurch können insbesondere bestehende und zum Teil miteinander inkompatible Feldbusse sowohl zum Austausch nicht-zeitsensitiver als auch zum Austausch zeitsensitiver Daten eingerichtet werden.

## Patentansprüche

1. Verfahren zur Vernetzung eines ersten zeitsensitiven Feldbusses (10) mit einem zweiten zeitsensitiven Feldbus (20), wobei der erste zeitsensitive Feldbus (10) ein erstes Teilnehmergerät (12, 14) umfasst und eine eigene erste Zeitdomäne (16) aufweist, und wobei der zweite zeitsensitive Feldbus (20) ein zweites Teilnehmergerät (22, 24) umfasst und eine eigene zweite Zeitdomäne (26) aufweist, wobei der erste und der zweite Feldbus (10, 20) mittels eines Gateways (30) zur Datenübertragung miteinander verbunden sind, wobei das Verfahren die folgenden Schritte aufweist:
- Definieren der ersten Zeitdomäne (16) im ersten Feldbus (10) durch das erste Teilnehmergerät (12, 14) des ersten Feldbusses (10);
- Definieren der zweiten Zeitdomäne (26) im zweiten Feldbus (20) durch das zweite Teilnehmergerät (12, 24) des zweiten Feldbusses (20);
- Übertragen von zeitsensitiven Daten in definierten ersten Zeitschlitzen (50) innerhalb des ersten Feldbusses (10);
- Übertragen von zeitsensitiven Daten in definierten zweiten Zeitschlitzen (52) innerhalb des zweiten Feldbusses (20); und
- Synchronisieren des Gateways (30) als Slave bezüglich der ersten Zeitdomäne (16) des ersten Feldbusses (10) und zusätzlich bezüglich der zweiten Zeitdomäne (26) des zweiten Feldbusses (20), wobei das Gateway (30) mindestens zwei Zeitdomänen (32, 34) gleichzeitig unterstützt.

2. Verfahren gemäß Anspruch 1, weiterhin aufweisend die folgenden Schritte:
- Übertragen (60) von nicht-zeitsensitiven Daten zu einer Zeit (54) außerhalb der ersten Zeitschlitze (50) von dem ersten Feldbus (10) zu dem Gateway (30);
- Zwischenspeichern (62) der nicht-zeitsensitiven Daten im Gateway (30); und
- Übertragen (64) der vom ersten Feldbus (10) erhaltenen, nicht-zeitsensitiven Daten vom Gateway (30) auf den zweiten Feldbus (20) zu einer Zeit (56) außerhalb der zweiten Zeitschlitze (52).

3. Verfahren gemäß einem der Ansprüche 1 oder 2, wobei zwischen der ersten Zeitdomäne (16) und der zweiten Zeitdomäne (26) gegeben ist:
a. ein Zeitversatz (58); und/oder
b. unterschiedliche Frequenzen (f1, f2); und/oder
c. unterschiedliche Zykluszeitdauern (TC1, TC2); und/oder
d. unterschiedliche Dauern (TS1, TS2) der ersten und zweiten Zeitschlitze (50, 52); und/oder
e. zeitliche Unterschiede (TD) zwischen ersten und zweiten Zeitschlitzen (50, 52).

4. Verfahren gemäß einem der Ansprüche 1 bis 3, wobei das Gateway (30) einen ersten Zeitgeber (36) und einen zweiten Zeitgeber (38) aufweist und wobei das Verfahren weiterhin die folgenden Schritte aufweist:
Synchronisieren des ersten Zeitgebers (36) als Slave mit der ersten Zeitdomäne (16) des ersten Feldbusses (10); und
Synchronisieren des zweiten Zeitgebers (38) als Slave mit der zweiten Zeitdomäne (26) des zweiten Feldbusses (20).

5. Verfahren gemäß Anspruch 4, wobei das Verfahren weiterhin die folgenden Schritte aufweist:
Synchronisieren zunächst ausschließlich der Frequenz (f1) des ersten Zeitgebers (36) des Gateways (30) auf die Frequenz (f2) der zweiten Zeitdomäne (26) des zweiten Zeitgebers (38) des Gateways (30); und
Setzen des ersten Zeitgebers (36) des Gateways (30) als Master für den ersten Feldbus (10), um die Frequenz (f1) des ersten Feldbusses (10) auf die Frequenz (f2) der zweiten Zeitdomäne (26) zu setzen.

6. Verfahren gemäß Anspruch 5, wobei das Verfahren weiterhin die folgenden Schritte aufweist:
Bestimmen der Zykluszeitdauer (TC1) der ersten Zeitdomäne (16) und der Zykluszeitdauer (TC2) der zweiten Zeitdomäne (26) durch das Gateway (30) zu einem Referenzzeitpunkt (TRef); und
Bestimmen eines Zeitversatzes (58) zwischen der ersten Zeitdomäne (16) und der zweiten Zeitdomäne (26) durch das Gateway (30) zu dem Referenzzeitpunkt (TRef); und
Kommunizieren der Zykluszeitdauer (TC1) der ersten Zeitdomäne (16) an den zweiten Feldbus (20) und kommunizieren der Zykluszeitdauer (TC2) der zweiten Zeitdomäne (26) an den ersten Feldbus (10) und kommunizieren des Zeitversatzes (58) mit Bezug auf den Referenzzeitpunkt (TRef) an beide Feldbusse (10, 20).

7. Verfahren gemäß Anspruch 6, wobei das Verfahren weiterhin die folgenden Schritte aufweist:
Definieren im ersten Feldbus (10) des ersten Zeitschlitzes (50) zur Kommunikation zeitkritischer Daten, durch das erste Teilnehmergerät (12, 14) des ersten Feldbusses (10); und
Definieren im zweiten Feldbus (20) des zweiten Zeitschlitzes (52) zur Kommunikation zeitkritischer Daten, durch das zweite Teilnehmergerät (22, 24) des zweiten Feldbusses (20);
wobei das Definieren derart erfolgt, dass sich die Zeitschlitze (50, 52) des ersten Feldbusses (10) und des zweiten Feldbusses (20) zeitlich überlappen (OL1, OL2).

8. Verfahren gemäß Anspruch 7, wobei das Verfahren weiterhin den folgenden Schritt aufweist:
Durchleiten von zeitkritischen Daten (70, 72) vom zweiten Feldbus (20) auf den ersten Feldbus (10) oder umgekehrt, während der zeitlich überlappenden Zeitschlitze (OL1, OL2).

9. Gateway (30) zur Vernetzung mindestens zweier zeitsensitiver Feldbusse (10, 20) mit unterschiedlichen Zeitdomänen (16, 26), aufweisend:
a. einen ersten Zeitgeber (36), der eingerichtet ist, sich als Slave bezüglich der ersten Zeitdomäne (16) des ersten Feldbusses (10) zu synchronisieren; und
b. einen zweiten Zeitgeber (38), der eingerichtet ist, sich als Slave bezüglich der zweiten Zeitdomäne (26) des zweiten Feldbusses (20) zu synchronisieren.

10. Gateway gemäß Anspruch 9, wobei das Gateway (30) eingerichtet ist, zur Datenübertragung nicht-zeitkritischer Daten zwischen dem ersten Feldbus (10) und dem zweiten Feldbus (20) zu Zeiten außerhalb von Zeitschlitzen (50, 52) für zeitkritische Daten des ersten Feldbusses (10) beziehungsweise zweiten Feldbusses (20), wobei das Gateway (30) einen Zwischenspeicher aufweist, zum Zwischenspeichern von erhaltenen nicht-zeitkritischen Daten eines Feldbusses (10, 20), vor dem Senden an den anderen Feldbus (20, 10).

11. Gateway gemäß einem der Ansprüche 9 oder 10, wobei das Gateway (30) weiterhin eingerichtet ist, zum Durchleiten von zeitkritischen Daten vom zweiten Feldbus (20) auf den ersten Feldbus (10) oder umgekehrt, während sich zeitlich überlappender (OL1, OL2) Zeitschlitze (50, 52).

12. System (1) zur Vernetzung mindestens zweier zeitsensitiver Feldbusse (10, 20), aufweisend:
a. ein erster zeitsensitiver Feldbus (10), aufweisend ein erstes Teilnehmergerät (12, 14) und eine eigene erste Zeitdomäne (16), wobei die erste Zeitdomäne (16) erste Zeitschlitze (50) zur Übertragung zeitsensitiver Daten beinhaltet;
b. ein zweiter zeitsensitiver Feldbus (20), aufweisend ein zweites Teilnehmergerät (22, 24) und eine eigene zweite Zeitdomäne (26), wobei die zweite Zeitdomäne (26) zweite Zeitschlitze (52) zur Übertragung zeitsensitiver Daten beinhaltet; und
c. mindestens ein Gateway (30) gemäß einem der Ansprüche 9 bis 11, das den ersten und zweiten Feldbus (10, 20) zur Datenübertragung miteinander verbindet.

13. System gemäß Anspruch 12, wobei das Gateway (30) einen Zwischenspeicher (35) aufweist, zum Zwischenspeichern (62) von zu einer Zeit (54) außerhalb der ersten Zeitschlitze (50) von dem ersten Feldbus (10) übertragenen (60) und von dem Gateway (30) erhaltenen nicht-zeitsensitiven Daten des ersten Feldbusses (10), und zum Übertragen (64) der zwischengespeicherten Daten vom Gateway (30) auf den zweiten Feldbus (20) außerhalb der zweiten Zeitschlitze (52).

14. System gemäß einem der Ansprüche 12 oder 13, wobei das Gateway (30) eingerichtet ist, Informationen über die ersten und zweiten Zeitschlitze (50, 52) des ersten und des zweiten Feldbusses (10, 20) zu empfangen und beim Senden der nicht-zeitkritischen Daten zu berücksichtigen.

15. System gemäß einem der Ansprüche 12 bis 14,
wobei das Teilnehmergerät (12, 14) des ersten Feldbusses (10) eingerichtet ist, die ersten Zeitschlitze (50) so zu definieren, und das Teilnehmergerät (22, 24) des zweiten Feldbusses (20) eingerichtet ist, die zweiten Zeitschlitze (52) so zu definieren, derart, dass sich die ersten und zweiten Zeitschlitze (50, 52) zeitlich überlappen; und
wobei das Gateway (30) weiterhin eingerichtet ist, zum Durchleiten von zeitkritischen Daten vom zweiten Feldbus (20) auf den ersten Feldbus (10) oder umgekehrt während der überlappenden ersten und zweiten Zeitschlitze (50, 52) des ersten und zweiten Feldbusses (10, 20).

## Claims

1. Method for networking a first time-sensitive field bus (10) with a second time-sensitive field bus (20), wherein the first time-sensitive field bus (10) comprises a first subscriber device (12, 14) and has its own first time domain (16), and wherein the second time-sensitive field bus (20) comprises a second subscriber device (22, 24) and has its own second time domain (26), wherein the first and the second field bus (10, 20) are connected to one another by means of a gateway (30) for data transmission, wherein the method has the following steps:
- defining the first time domain (16) in the first field bus (10) by the first subscriber device (12, 14) of the first field bus (10);
- defining the second time domain (26) in the second field bus (20) by the second subscriber device (12, 24) of the second field bus (20);
- transmitting time-sensitive data in defined first time slots (50) within the first field bus (10);
- transmitting time-sensitive data in defined second time slots (52) within the second field bus (20); and
- synchronizing the gateway (30) as a slave with respect to the first time domain (16) of the first field bus (10) and additionally with respect to the second time domain (26) of the second field bus (20), wherein the gateway (30) supports at least two time domains (32, 34) at the same time.

2. Method according to Claim 1, furthermore having the following steps:
- transmitting (60) non-time-sensitive data at a time (54) outside the first time slots (50) from the first field bus (10) to the gateway (30);
- buffering (62) the non-time-sensitive data in the gateway (30); and
- transmitting (64) the non-time-sensitive data received from the first field bus (10) from the gateway (30) to the second field bus (20) at a time (56) outside the second time slots (52).

3. Method according to either of Claims 1 or 2, wherein the following is provided between the first time domain (16) and the second time domain (26):
a. a time offset (58); and/or
b. different frequencies (f1, f2); and/or
c. different cycle time durations (TC1, TC2); and/or
d. different durations (TS1, TS2) of the first and second time slots (50, 52); and/or
e. time differences (TD) between first and second time slots (50, 52).

4. Method according to one of Claims 1 to 3, wherein the gateway (30) has a first timer (36) and a second timer (38), and wherein the method furthermore has the following steps:
synchronizing the first timer (36) as a slave with the first time domain (16) of the first field bus (10); and
synchronizing the second timer (38) as a slave with the second time domain (26) of the second field bus (20).

5. Method according to Claim 4, wherein the method furthermore has the following steps:
initially exclusively synchronizing the frequency (f1) of the first timer (36) of the gateway (30) with the frequency (f2) of the second time domain (26) of the second timer (38) of the gateway (30); and
setting the first timer (36) of the gateway (30) as a master for the first field bus (10) in order to set the frequency (f1) of the first field bus (10) with the frequency (f2) of the second time domain (26).

6. Method according to Claim 5, wherein the method furthermore has the following steps:
determining the cycle time duration (TC1) of the first time domain (16) and the cycle time duration (TC2) of the second time domain (26) by the gateway (30) at a reference time (TRef); and
determining a time offset (58) between the first time domain (16) and the second time domain (26) by the gateway (30) at the reference time (TRef); and
communicating the cycle time duration (TC1) of the first time domain (16) to the second field bus (20) and communicating the cycle time duration (TC2) of the second time domain (26) to the first field bus (10) and communicating the time offset (58) with respect to the reference time (TRef) to both field buses (10, 20).

7. Method according to Claim 6, wherein the method furthermore has the following steps:
defining in the first field bus (10) the first time slot (50) for the communication of time-critical data by the first subscriber device (12, 14) of the first field bus (10); and
defining in the second field bus (20) the second time slot (52) for the communication of time-critical data by the second subscriber device (22, 24) of the second field bus (20);
wherein the definition is carried out in such a way that the time slots (50, 52) of the first field bus (10) and of the second field bus (20) overlap in time (OL1, OL2).

8. Method according to Claim 7, wherein the method furthermore has the following step:
passing time-critical data (70, 72) from the second field bus (20) to the first field bus (10) or vice versa during the time slots (OL1, OL2) which overlap in time.

9. Gateway (30) for networking at least two time-sensitive field buses (10, 20) with different time domains (16, 26), having:
a. a first timer (36) which is set up to synchronize itself as a slave with respect to the first time domain (16) of the first field bus (10); and
b. a second timer (38) which is set up to synchronize itself as a slave with respect to the second time domain (26) of the second field bus (20).

10. Gateway according to Claim 9, wherein the gateway (30) is set up to transmit non-time-critical data between the first field bus (10) and the second field bus (20) at times outside time slots (50, 52) for time-critical data of the first field bus (10) or second field bus (20), wherein the gateway (30) has a buffer for buffering received non-time-critical data of a field bus (10, 20) before sending to the other field bus (20, 10).

11. Gateway according to either of Claims 9 or 10, wherein the gateway (30) is furthermore set up to pass time-critical data from the second field bus (20) to the first field bus (10) or vice versa during time slots (50, 52) which overlap in time (OL1, OL2).

12. System (1) for networking at least two time-sensitive field buses (10, 20), having:
a. a first time-sensitive field bus (10), having a first subscriber device (12, 14) and its own first time domain (16), wherein the first time domain (16) contains first time slots (50) for the transmission of time-sensitive data;
b. a second time-sensitive field bus (20), having a second subscriber device (22, 24) and its own second time domain (26), wherein the second time domain (26) contains second time slots (52) for the transmission of time-sensitive data; and
c. at least one gateway (30) according to one of Claims 9 to 11, which connects the first and the second field bus (10, 20) to one another for data transmission.

13. System according to Claim 12, wherein the gateway (30) has a buffer (35) for buffering (62) non-time-sensitive data of the first field bus (10) transmitted (60) at a time (54) outside the first time slots (50) from the first field bus (10) and received from the gateway (30), and for transmitting (64) the buffered data from the gateway (30) to the second field bus (20) outside the second time slots (52).

14. System according to either of Claims 12 or 13, wherein the gateway (30) is set up to receive information about the first and second time slots (50, 52) of the first and the second field bus (10, 20) and to take it into account when sending the non-time-critical data.

15. System according to one of Claims 12 to 14,
wherein the subscriber device (12, 14) of the first field bus (10) is set up to define the first time slots (50) in such a way, and the subscriber device (22, 24) of the second field bus (20) is set up to define the second time slots (52) in such a way that the first and second time slots (50, 52) overlap in time; and
wherein the gateway (30) is furthermore set up to pass time-critical data from the second field bus (20) to the first field bus (10) or vice versa during the overlapping first and second time slots (50, 52) of the first and second field bus (10, 20).

## Revendications

1. Procédé de mise en réseau d'un premier bus de terrain (10) sensible au temps avec un deuxième bus de terrain (20) sensible au temps, dans lequel le premier bus de terrain (10) sensible au temps inclut un premier dispositif de participant (12, 14) et comporte un premier domaine temporel (16) dédié, et dans lequel le deuxième bus de terrain (20) sensible au temps inclut un deuxième dispositif de participant (22, 24) et comporte un deuxième domaine temporel (26) dédié, dans lequel le premier et le deuxième bus de terrain (10, 20) sont reliés l'un à l'autre au moyen d'une passerelle (30) pour la transmission de données, dans lequel le procédé comporte les étapes suivantes :
- définition du premier domaine temporel (16) dans le premier bus de terrain (10) par le premier dispositif de participant (12, 14) du premier bus de terrain (10) ;
- définition du deuxième domaine temporel (26) dans le deuxième bus de terrain (20) par le deuxième dispositif de participant (12, 24) du deuxième bus de terrain (20) ;
- transmission de données sensibles au temps dans les premiers créneaux horaires (50) définis dans le premier bus de terrain (10) ;
- transmission de données sensibles au temps dans des deuxièmes créneaux horaires (52) définis dans le deuxième bus de terrain (20) ; et
- synchronisation de la passerelle (30) en tant qu'esclave par rapport au premier domaine temporel (16) du premier bus de terrain (10) et en plus par rapport au deuxième domaine temporel (26) du deuxième bus de terrain (20), dans lequel la passerelle (30) prend en charge au moins deux domaines temporels (32, 34) simultanément.

2. Procédé selon la revendication 1, comportant par ailleurs les étapes suivantes :
- transmission (60) de données non sensibles au temps à un moment (54) en dehors des premiers créneaux horaires (50) du premier bus de terrain (10) à la passerelle (30) ;
- stockage temporaire (62) des données non sensibles au temps dans la passerelle (30) ; et
- transmission (64) des données non sensibles au temps reçues par le premier bus de terrain (10) de la passerelle (30) sur le deuxième bus de terrain (20) à un moment (56) en dehors des deuxièmes créneaux horaires (52).

3. Procédé selon l'une des revendications 1 ou 2, dans lequel il existe entre le premier domaine temporel (16) et le deuxième domaine temporel (26) :
a. un décalage temporel (58) ; et/ou
b. des fréquences différentes (f1, f2) ; et/ou
c. des durées de cycle différentes (TC1, TC2) ; et/ou
d. des durées différentes (TS1, TS2) des premier et deuxième créneaux horaires (50, 52) ; et/ou
e. des différences temporelles (TD) entre le premier et le deuxième créneau horaire (50, 52).

4. Procédé selon l'une des revendications 1 à 3, dans lequel la passerelle (30) comporte un premier temporisateur (36) et un deuxième temporisateur (38), et dans lequel le procédé comporte par ailleurs les étapes suivantes :
synchronisation du premier temporisateur (36) en tant qu'esclave avec le premier domaine temporel (16) du premier bus de terrain (10) ; et
synchronisation du deuxième temporisateur (38) en tant qu'esclave avec le deuxième domaine temporel (26) du deuxième bus de terrain (20).

5. Procédé selon la revendication 4, dans lequel le procédé comporte par ailleurs les étapes suivantes :
d'abord, synchronisation exclusivement de la fréquence (f1) du premier temporisateur (36) de la passerelle (30) sur la fréquence (f2) du deuxième domaine temporel (26) du deuxième temporisateur (38) de la passerelle (30) ; et
définition du premier temporisateur (36) de la passerelle (30) en tant que maître pour le premier bus de terrain (10) pour définir la fréquence (f1) du premier bus de terrain (10) sur la fréquence (f2) du deuxième domaine temporel (26).

6. Procédé selon la revendication 5, dans lequel le procédé comporte par ailleurs les étapes suivantes :
détermination de la durée de cycle (TC1) du premier domaine temporel (16) et de la durée de cycle (TC2) du deuxième domaine temporel (26) par la passerelle (30) à un moment de référence (TRef) ; et
détermination d'un décalage temporel (58) entre le premier domaine temporel (16) et le deuxième domaine temporel (26) par la passerelle (30) au moment de référence (TRef) ; et
de communication de la durée de cycle (TC1) du premier domaine temporel (16) au deuxième bus de terrain (20) et de communication de la durée de cycle (TC2) du deuxième domaine temporel (26) au premier bus de terrain (10) et de communication du décalage temporel (58) par rapport au moment de référence (TRef) aux deux bus de terrain (10, 20).

7. Procédé selon la revendication 6, dans lequel le procédé comporte par ailleurs les étapes suivantes :
définition dans le premier bus de terrain (10) du premier créneau horaire (50) pour la communication de données critiques en termes de temps, par le premier dispositif de participant (12, 14) du premier bus de terrain (10) ; et
définition dans le deuxième bus de terrain (20) du deuxième créneau horaire (52) pour la communication de données critiques en termes de temps, par le deuxième dispositif de participant (22, 24) du deuxième bus de terrain (20) ;
dans lequel la définition est effectuée de telle manière que les créneaux horaires (50, 52) du premier bus de terrain (10) et du deuxième bus de terrain (20) se chevauchent dans le temps (OL1, OL2).

8. Procédé selon la revendication 7, dans lequel le procédé comporte par ailleurs l'étape suivante :
acheminement de données critiques en termes de temps (70, 72) du deuxième bus de terrain (20) sur le premier bus de terrain (10), ou inversement, pendant les créneaux horaires se chevauchant dans le temps (OL1, OL2).

9. Passerelle (30) de mise en réseau d'au moins deux bus de terrain (10, 20) sensibles au temps avec des domaines temporels (16, 26) différents, comportant :
a. un premier temporisateur (36) qui est agencé pour se synchroniser en tant qu'esclave par rapport au premier domaine temporel (16) du premier bus de terrain (10) ; et
b. un deuxième temporisateur (38) qui est agencé pour se synchroniser en tant qu'esclave par rapport au deuxième domaine temporel (26) du deuxième bus de terrain (20).

10. Passerelle selon la revendication 9,
dans laquelle la passerelle (30) est agencée pour la transmission de données non critiques en termes de temps entre le premier bus de terrain (10) et le deuxième bus de terrain (20) à des moments en dehors de créneaux horaires (50, 52) pour des données critiques en termes de temps du premier bus de terrain (10) et/ou du deuxième bus de terrain (20), dans laquelle la passerelle (30) comporte une mémoire intermédiaire pour stocker temporairement des données non critiques en termes de temps reçues d'un bus de terrain (10, 20) avant de les envoyer à l'autre bus de terrain (20, 10).

11. Passerelle selon l'une des revendications 9 ou 10, dans laquelle la passerelle (30) est en outre agencée pour acheminer des données critiques en termes de temps du deuxième bus de terrain (20) sur le premier bus de terrain (10), ou inversement, pendant des créneaux horaires (50, 52) se chevauchant dans le temps (OL1, OL2).

12. Système (1) de mise en réseau d'au moins deux bus de terrain (10, 20) sensibles au temps, comportant :
a. un premier bus de terrain (10) sensible au temps, incluant un premier dispositif de participant (12, 14) et un premier domaine temporel (16) dédié, dans lequel le premier domaine temporel (16) comporte des premiers créneaux horaires (50) pour la transmission de données sensibles au temps ;
b. un deuxième bus de terrain (20) sensible au temps, incluant un deuxième dispositif de participant (22, 24) et un deuxième domaine temporel (26) dédié, dans lequel le deuxième domaine temporel (26) comporte des deuxièmes créneaux horaires (52) pour la transmission de données sensibles au temps ; et
c. au moins une passerelle (30) selon l'une des revendications 9 à 11, qui relie le premier et le deuxième bus de terrain (10, 20) l'un à l'autre pour la transmission de données.

13. Système selon la revendication 12,
dans lequel la passerelle (30) comporte une mémoire intermédiaire (35) pour stocker temporairement (62) des données non sensibles au temps du premier bus de terrain (10) transmises (60) par le premier bus de terrain (10) à un moment (54) en dehors des premiers créneaux horaires (50) et reçues de la passerelle (30) et pour transmettre (64) les données stockées temporairement de la passerelle (30) sur le deuxième bus de terrain (20) en dehors des deuxièmes créneaux horaires (52).

14. Système selon l'une des revendications 12 ou 13,
dans lequel la passerelle (30) est agencée pour recevoir des informations sur les premier et deuxième créneaux horaires (50, 52) du premier et du deuxième bus de terrain (10, 20) et pour les prendre en compte lors de l'envoi des données non critiques en termes de temps.

15. Système selon l'une des revendications 12 à 14,
dans lequel le dispositif de participant (12, 14) du premier bus de terrain (10) est agencé pour définir les premiers créneaux horaires (50) de telle sorte que le dispositif de participant (22, 24) du deuxième bus de terrain (20) soit agencé pour définir les deuxièmes créneaux horaires (52) de telle sorte que les premier et deuxième créneaux horaires (50, 52) se chevauchent dans le temps ; et
dans lequel la passerelle (30) est en outre agencée pour acheminer des données critiques en termes de temps du deuxième bus de terrain (20) sur le premier bus de terrain (10), ou inversement, pendant les premier et deuxième créneaux horaires (50, 52) se chevauchant du premier et du deuxième bus de terrain (10, 20).
